# EUROPÄISCHE PATENTSCHRIFT

(11) **EP 2 366 576 B1**
(45) Veröffentlichungstag und Bekanntmachung des Hinweises auf die Patenterteilung: **29.05.2013**
(21) Anmeldenummer: 11000765.5
(22) Anmeldetag: 01.02.2011
(51) Int. Cl.: B60K 7/00, B60K 17/04, F41H 7/00

(54) **Achsbaustein für ein gepanzertes Radfahrzeug**
Axel module for an armoured wheeled vehicle
Module d'axe pour un véhicule sur roues blindé

(30) Priorität: 06.02.2010 DE 102010007066
(43) Veröffentlichungstag der Anmeldung: 21.09.2011
(73) Patentinhaber: Rheinmetall Landsysteme GmbH, 24107 Kiel (DE)
(72) Erfinder: Boeckmann, Frank, 24623 Brokenlande (DE); Hass, Frank, 24226 Heikendorf (DE); Landhal, Karsten, 22869 Schenefeld (DE); Runow, Eitel, 24620 Bönebüttel (DE)
(74) Vertreter: Dietrich, Barbara

(56) Entgegenhaltungen:
- EP-A2- 0 885 792
- WO-A1-03/104011
- WO-A1-2004/035342
- DE-C1- 4 421 425
- US-A- 4 168 757
- US-A- 4 962 821

## Beschreibung

Die Erfindung betrifft einen Achsbaustein für ein aus mehreren Fahrzeugmodulen zusammensetzbares, gepanzertes Radfahrzeug.

Ein derartiger Achsbaustein ist beispielsweise aus dem im Internet veröffentlichten Artikel der Rheinmetall AG, Düsseldorf, "Mittelschweres Radfahrzeug nach dem Modulprinzip" (Http://www.rheinmetall.de/index.php?lanq=2&fid=1698) bekannt. Dabei umfasst der Achsbaustein, der lenkbar ausgebildet ist, eine Wanne aus Panzerstahl und ein zwei Fahrzeugräder aufweisendes Fahrwerk, an dem sich die Wanne bodenseitig abstützt. Zum Antrieb des Achsbausteines befindet sich in der Wanne mindestens ein Elektromotor mit nach geschaltetem Achsgetriebe, welches sich seinerseits in einem Getriebegehäuse befindet. Nähere Einzelheiten über den Aufbau des Achsbausteines lassen sich diesem Artikel nicht entnehmen.

Um die beiden Fahrzeugräder unabhängig voneinander antreiben zu können, ist vorgeschlagen worden, als Antrieb des Achsbausteines zwei separate Elektromotore zu verwenden, die unabhängig voneinander über jeweils ein ihnen zugeordnetes herkömmliches Achsgetriebe mit jeweils einem Fahrzeugrad verbunden sind.

Nachteilig ist bei einem derartigen Antrieb allerdings, dass zur Aufnahme der beiden Achsgetriebe die Wanne des Achsbausteines relativ breit ausgebildet sein muss. Außerdem sind die Achsbausteine aufgrund des hohen Gewichtes der beiden Getriebegehäuse relativ schwer, was beispielsweise für eine Luftverlastbarkeit der aus den Fahrzeugmodulen zusammengesetzten kompletten Fahrzeuge unerwünscht ist.

Der Erfindung liegt die Aufgabe zugrunde, einen Achsbaustein der eingangs erwähnten Art anzugeben, dessen Antrieb mindestens zwei Elektromotoren mit nach geschalteten Achsgetrieben umfasst, die jeweils mit einem Fahrzeugrad verbunden sind, wobei die Achsgetriebe zusammen weniger Platz einnehmen sollen als dieses bei Verwendung bekannter Achsgetriebe möglich ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die gattungsbildende US 4,962,281 A beschreibt ein Antriebssystem für Minilader, die ein hohes Maß an Wendigkeit besitzen. Der Minilader umfasst vier Räder, die auf je einem zugehörigen Achsgetriebe aufgehängt sind. Je zwei Achsgetriebe sind über die Länge des Laders gesehen in einem gemeinsamen Getriebegehäuse eingebunden. Das jeweilige Getriebegehäuse wird dabei gebildet durch die jeweilige die Räder tragende Seitenwand, zwei inneren Seitenwänden sowie zwei, das jeweilige Getriebegehäuse abdeckende Abdeckplatten.

Aus der US 4,168,757 A ist ein Antriebssystem für einen Minilader bekannt, bei dem das Antriebsystem in einem Gehäuse untergebracht ist, aus dem hintere und vordere Achsschenkel ragen. Das Gehäuse wird durch zwei Seitenwände, einer oberen und einer unteren Wand gebildet. Achsgehäuse der Achsschenkel sind an den Seitenwänden verschweißt. Achsschenkelwellen sind drehbar in den Achsgehäusen gelagert und tragen an ihren inneren Enden Kettenräder, die durch Ketten mit den Antriebsrädern einer Abtriebswelle verbunden sind. Für den Zugang zum Inneren des Gehäuses sind Abdeckplatten in der oberen Wand montiert. Untersetzungseinheiten sind an den jeweils gegenüberliegenden Seitenwänden des Getriebegehäuses angebracht. Das Getriebegehäuse ist zusätzlich zu Wanne im Fahrzeug eingebunden!

Die DE 44 21 425 C offenbart ein elektrisches Antriebsaggregat für ein Fahrzeug, das zwei voneinander gesondert funktionsfähige Baueinheiten umfasst, von denen jede einen Elektromotor und ein dem anzutreibenden Antriebsrad zugewandten angeordnetes Getriebe aufweist.

Die WO 2004/035342 A betrifft ein Fahrzeug mit elektrischen Einzelradantrieben, bei denen die Antriebsmotoren radial außerhalb der Antriebsräder angeordnet sind. Zur betrieblichen Verbindung eines rechten Antriebsmotors mit dem rechten Antriebsrad ist ein rechtes Verbindungsgetriebe und zur betrieblichen Verbindung eines linken Antriebsmotors mit einem linken Antriebsrad ist ein linkes Verbindungsgatriebe vorgesehen. Dessen gemeinsames Gehäuse ist starr mit der Fahrzeugwanne verbunden.

Mit der WO 03/104011 A wird ein elektrisch angetriebenes Fahrzeug mit Einzelradantrieb publiziert. Jedem Rad sind ein Antriebsmotor und ein Verbindungsgetriebe zugeordnet. Hierbei ist das jeweilige Gehäuse der Verbindungsgetriebe seltlich und starr mit der Fahrzeugwanne verbunden.

Die Erfindung beruht ihrereseits im Wesentlichen auf dem Gedanken, für beide Achsgetriebe ein einziges Getriebegehäuse zu verwenden, wobei es sich bei diesem Getriebegehäuse um die Wanne des Achsbausteines handelt. Dabei sind die äußeren Lager der Abtriebswellen der Achsgetriebe und gegebenenfalls auch die Sitze von Radialwellendichtringen (Simmerringen) zur dynamischen Abdichtung der Abtriebswellen In den Seitenwänden der Wanne angeordnet.

Durch den kompakten Aufbau der Getriebeanordnung des Achsbausteines und der sich dadurch ergebenden geringen Wannenbreite wird erreicht, dass auch bei Verwendung von herkömmilchen (d.h. auf dem Markt verfügbaren) Doppel/Querienkerachsen die Spurweite des jeweiligen Achsbausteines gering gehalten und damit die Straßenzulassung für entsprechende Fahrzeuge gesichert werden kann. Außerdem wird gegenüber der Verwendung herkömmlicher Achsgetriebe mit eigenen Getriebegehäusen das Gewicht des erfindungsgemäßen Achsbausteines wesentlich reduziert.

Um eine besonders kompakte Bauweise der aus den beiden Achsgetrieben bestehenden Getriebeanordnung zu erreichen, sind mindestens ein Teil der den Seitenwänden der Wanne benachbarten Lagersitze der Getriebewellen in oder an den Seitenwänden der Wanne angeordnet. Dabei hat es sich als vorteilhaft erwiesen, wenn mindestens ein Teil der den Seitenwänden der Wanne abgewandten Lagereitze der Getriebewellen der beiden Achsgetriebe in einem gemeinsamen mit der Wanne befestigten Lagergestell angeordnet sind.

Allerdings kann auch vorgesehen werden, dass die beiden Enden der jeweiligen Getriebewelle in Lagersitzen eines Lagergestelles angeordnet sind. Dadurch ist auf besonders einfache Weise eine Vormontage der beiden Achsgetriebe möglich, die anschließend dann durch Befestigung des Lagergestelles innerhalb der Wanne in dieser angeordnet werden.

Da nur die Abtriebswellen nach Einpassen des komplett mit Wellen vormontierten Lagergestelles seitlich eingefädelt werden müssen, können die Simmerringe bei Verschleiß ohne Demontage des Lagergestelles gewechselt werden.

Im Hinblick darauf, dass die Getriebewände die Außenwände der Wannen des Achsbausteines bilden, ist zur Getriebekühlung eine Luftkühlung ausreichend.

Notwendige Montageöffnungen können mit Deckeln verschlossen werden, die als Kühlkörper ausgeführt sind.

Weitere Einzelheiten und Vorteile der Erfindung ergeben sich aus den folgenden, anhand von Figuren erläuterten Ausführungsbeispielen. Es zeigen:
- Fig. 1: eine teilweise im Schnitt dargestellte schematische Ansicht eines ersten Ausführungsbeispieles eines erfindungsgemäßen Achsbausteines,
- Fig. 2: eine perspektivische Ansicht eines zweiten Ausführungsbeispieles eines erfindungsgemäßen Achsbausteines, wobei die Fahrzeugräder nicht dargestellt sind und
- Fig. 3: den Längsschnitt eines dritten Ausführungsbeispieles eines schematisch dargestellten erfindungsgemäßen Achsbausteines.

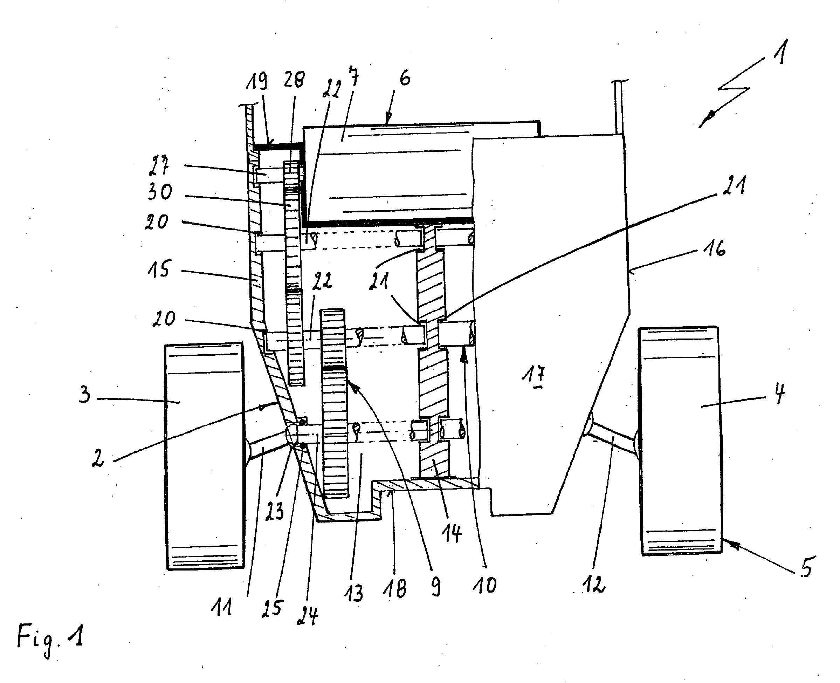

In Fig. 1 ist mit 1 ein lenkbarer Achsbaustein für ein aus mehreren Fahrzeugmodulen zusammensetzbares, gepanzertes Radfahrzeug bezeichnet. Der Achsbaustein 1 umfasst eine Wanne 2 aus Panzerstahl, ein zwei Fahrzeugräder 3, 4 aufweisendes Fahrwerk 5, an dem sich die Wanne 2 bodenseitig abstützt, und einen Antrieb 6 (weitere Baueinheiten, wie etwa ein Lenkgetriebe oder Kühlkörper zum Kühlen des Antriebes 6 sind aus Übersichtlichkeitsgründen nicht dargestellt).

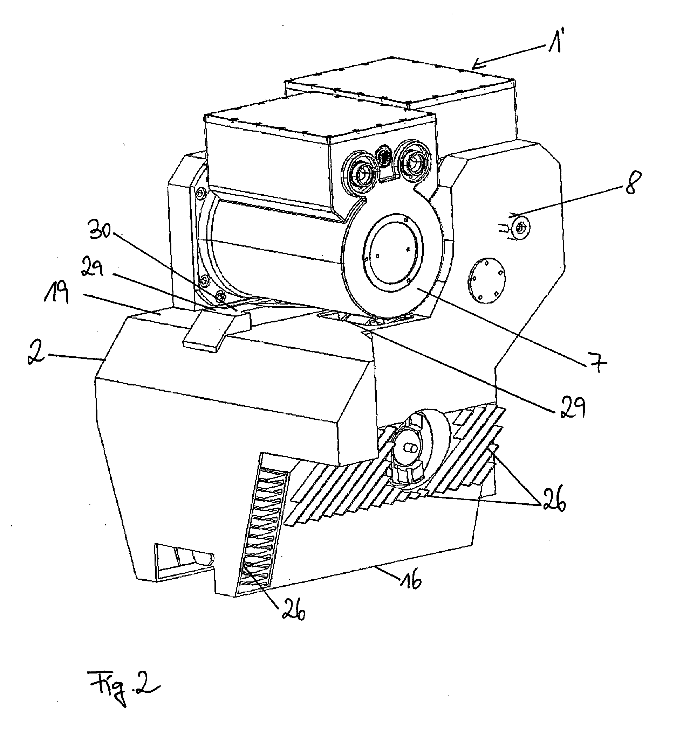

Um die beiden Fahrzeugräder 3, 4 unabhängig voneinander antreiben zu können, umfasst der Antrieb 6 des Achsbausteines 1 zwei separate Elektromotoren 7, 8 (in der Fig. 1 ist nur ein Elektromotor dargestellt, da sich der zweite Elektromotor hinter der Bildebene befindet; vgl. aber auch Fig. 2), die unabhängig voneinander über jeweils ein ihnen zugeordnetes Achsgetriebe 9, 10 und über eine Gelenkwelle 11, 12 mit jeweils einem Fahrzeugrad 3, 4 verbunden sind.

Die beiden Achsgetriebe 9, 10 befinden sich in dem bodenseitigen Raum 13 der Wanne 2. Dabei ist in der Fig. 1 lediglich das mit dem Elektromotor 7 verbundene Achsgetriebe 9 dargestellt, welches über die Gelenkwelle 11 auf das Fahrzeugrad 3 wirkt. Das zweite, über die Gelenkwelle 12 auf das Fahrzeugrad 4 wirkende Achsgetriebe 10 ist entsprechend aufgebaut und ist in Bezug auf ein senkrecht in der Wanne 2 angeordnetes Lagergestell 14, etwa symmetrisch zu dem ersten Achsgetriebe 9 angeordnet.

Wie Fig. 1 zu entnehmen ist, sind die beiden Achsgetriebe 9, 10 nicht jeweils von einem eigenen Getriebegehäuse umgeben, sondern besitzen ein gemeinsames Getriebegehäuse, welches im wesentlichen durch die Wände 15-18 der Wanne 2 gebildet wird und oberseitig durch einen Deckel 19 verschlossen ist.

Die Lagersitze 20, 21 der Getriebewellen 22 der beiden Achsgetriebe 9, 10 befinden sich einerseits in den Seitenwänden 15, 16 der Wanne 2 und andererseits in dem Lagergestell 14.

Auch das äußere Lager 23 der Abtriebswellen 24 der Achsgetriebe 9, 10 sowie die Sitze der Radialwellendichtung 25 der Abtriebswellen 24 sind in oder an den, den Fahrzeugrädern 3, 4 benachbarten, gegenüberliegenden Seitenwänden 15, 16 der Wanne 2 angeordnet.

Fig. 2 zeigt die perspektivische Darstellung eines zweiten Ausführungsbeispieles eines erfindungsgemäßen Achsbausteines 1', wobei für gleiche Funktionsbausteine gleiche Bezugszeichen wie in Fig. 1 verwendet sind. Dabei sind die Fahrzeugräder aus Übersichtlichkeitsgründen weggelassen.

Wie Fig. 2 entnehmbar ist, sind an der mit 16 bezeichneten Seitenwand der Wanne drei Kühlkörper 26 zur Luftkühlung der in der Wanne 2 befindlichen Achsgetriebe vorgesehen. Außerdem wirkt bei diesem Ausführungsbeispiel das auf der Abtriebswelle 27 der Elektromotoren 7, 8 befindliche Ritzel 28 (Fig. 1) durch eine obere Öffnung 29 des Deckels 19 des durch die Wanne 2 gebildeten Gehäuses auf das auf der oberen Getriebewelle (Antriebswelle) 22 befindliche Zahnrad 30 des jeweiligen Achsgetriebes 9, 10.

Auch bei dem in Fig. 2 dargestellten Ausführungsbeispiel befinden sich die beiden Achsgetriebe 9, 10 (Fig. 1) in einem gemeinsamen, bodenseitig angeordneten Raum der Wanne 2. Durch die Anordnung der beiden Achsgetriebe 9, 10 in einem gemeinsamen Raum (Getriebegehäuse) ist es vorteilhafterweise möglich, dass beide Achsgetriebe 9, 10 einen gemeinsamen Ölkreislauf nutzen.

Die Erfindung ist selbstverständlich nicht auf die vorstehend beschriebenen Ausführungsbeispiele beschränkt. So hat es sich beispielsweise bei Achsbausteinen mit Feststellbremsen als vorteilhaft erwiesen, wenn die Bremsscheibe der jeweiligen Feststellbremse in einem offenen Querschacht des entsprechenden Achsbausteines angeordnet ist. Dieser Querschacht kann sich vor oder hinter dem die beiden Achsgetriebe 9, 10 aufnehmenden (geschlossenen) Raum befinden. Dadurch werden die Bremsscheiben durch die Außenluft gekühlt und sind außerdem im Hinblick auf einen Beschuß mittels ballistischer Geschosse sicher untergebracht.

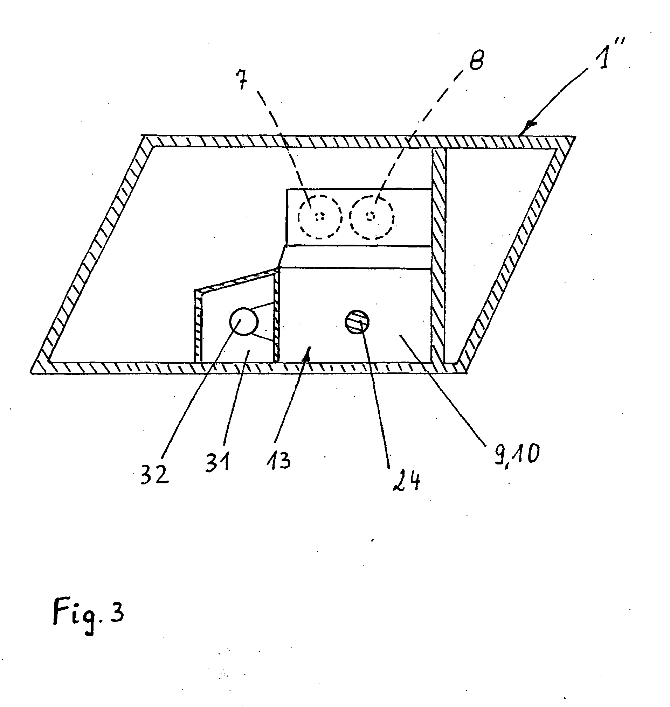

Ein entsprechendes Ausführungsbeispiel ist Fig. 3 entnehmbar. Dabei umfaßt der mit 1" bezeichnete Achsbaustein wiederum Elektromotoren 7, 8, die auf Achsgetriebe 9, 10 wirken, welche in einem gemeinsamen geschlossenen Raum 13 angeordnet sind. Seitlich vor dem Raum 13 ist ein außenseitig offener Querschacht 31 vorgesehen, in dem sich eine nur schematisch angedeutete Feststellbremse 32 mit entsprechenden Bremsscheiben befindet, welche über Nebenwellen mit den Achsgetrieben 9, 10 verbunden sind.

### Bezugszeichenliste

- 1,1',1": Achsbaustein
- 2: Wanne
- 3,4: Fahrzeugräder
- 5: Fahrwerk
- 6: Antrieb
- 7, 8: Elektromotoren
- 9: (erstes) Achsgetriebe
- 10: (zweites) Achsgetriebe
- 11, 12: Gelenkwellen
- 13: Raum
- 14: Lagergestell
- 15: Wand, Seitenwand
- 16: Wand, Seitenwand
- 17: Wand
- 18: Wand
- 19: Deckel
- 20,21: Lagersitze
- 22: Getriebewelle
- 23: äußeres Lager
- 24: Abtriebswelle (Achsgetriebe)
- 25: Radialwellendichtung
- 26: Kühlkörper
- 27: Abtriebswelle (Motor)
- 28: Ritzel
- 29: obere Öffnung
- 30: Zahnrad
- 31: Querschacht
- 32: Feststellbremse

## Patentansprüche

1. Achsbaustein für ein aus mehreren Fahrzeugmodulen zusammensetzbares Radfahrzeug mit den Merkmalen:
a) der Achsbaustein (1; 1'; 1") umfasst eine Wanne (2), ein mindestens zwei Fahrzeugräder (3, 4) aufweisendes Fahrwerk (5), an dem sich die Wanne (2) bodenseitig abstützt, und einen Antrieb (6);
b) innerhalb der Wanne (2) sind mindestens zwei mit An- und Abtriebswellen versehene Achsgetriebe (9, 10) angeordnet, die unabhängig voneinander je einen Elektromotor (7, 8) mit je einem außerhalb der Wanne (2) befindlichen Fahrzeugrad (3, 4) des Fahrwerkes (5) verbinden;
c) die beiden Achsgetriebe (9, 10) besitzen ein gemeinsames, durch die Wanne (2) des Achsbausteines (1; 1'; 1 ") gebildetes Getriebegehäuse und
d) die äußeren Lager (23) der Abtriebswellen (24) der Achsgetriebe (9, 10) sowie die Sitze der Radialwellendichtung (25) der Abtriebswellen (24) sind in oder an den, den Fahrzeugrädern (3, 4) benachbarten, gegenüberliegenden Seitenwänden (15, 16) der Wanne (2) angeordnet, **dadurch gekennzeichnet, dass** das Radfahrzeug gepanzert ist und dass mindestens ein Teil der den Seitenwänden (15, 16) der Wanne (2) abgewandten Lagersitze (21) der Getriebewellen (22) der beiden Achsgetriebe (9, 10) in einem gemeinsamen mit der Wanne (2) befestigten Lagergestell (14) angeordnet sind.

2. Achsbaustein nach Anspruch 1, **dadurch gekennzeichnet, dass** mindestens ein Teil der den Seitenwänden (15, 16) der Wanne (2) benachbarten Lagersitze (20) der Getriebewellen (22) der Achsgetriebe (9, 10) in oder an den Seitenwänden (15, 16) der Wanne (2) angeordnet sind.

3. Achsbaustein nach Anspruch 1, **dadurch gekennzeichnet, dass** die beiden Achsgetriebe (9, 10) in Bezug auf das Lagergestell (14) symmetrisch zueinander angeordnet sind.

4. Achsbaustein nach einem der Ansprüche 1 bis 3, **dadurch gekennzeichnet, dass** mindestens an den Außenseiten der Seitenwänden (15, 16) der Wanne (2) Kühlkörper (26) zur Luftkühlung der Achsgetriebe (9, 10) angeordnet sind.

5. Achsbaustein nach einem der Ansprüche 1 bis 4, **dadurch gekennzeichnet, dass** die beiden, in dem Getriebegehäuse befindlichen Achsgetriebe (9, 10) einen gemeinsamen Ölkreislauf nutzen.

6. Achsbaustein nach einem der Ansprüche 1 bis 5, **dadurch gekennzeichnet, dass** sich seitlich an dem die beiden Achsgetriebe enthaltenden Getriebegehäuse ein offener Querschacht (31) angeordnet ist, in dem mindestens eine Bremsscheibe einer Feststellbremse (32) zur Kühlung durch die Außenluft angeordnet ist.

## Claims

1. Axle module for a wheeled vehicle that can be assembled from a plurality of vehicle modules, having the features:
a) the axle module (1; 1'; 1") comprises a hull (2), a running gear (5) which has at least two vehicle wheels (3, 4) and on which the hull (2) is supported at the base side, and a drive (6);
b) within the hull (2) there are arranged at least two axle drives (9, 10) which are provided with input and output shafts and which, independently of one another, connect in each case one electric motor (7, 8) to in each case one vehicle wheel (3, 4), situated outside the hull (2), of the running gear (5);
c) the two axle drives (9, 10) have a common drive housing formed by the hull (2) of the axle module (1; 1'; 11"), and
d) the outer bearings (23) of the output shafts (24) of the axle drives (9, 10) and the seats of the radial shaft seal (25) of the output shafts (24) are arranged in or on the opposite side walls (15, 16), which are adjacent to the vehicle wheels (3, 4), of the hull (2), **characterized in that** the wheeled vehicle is armoured and **in that** at least some of the bearing seats (21), which are remote from the side walls (15, 16) of the hull (2), of the drive shafts (22) of the two axle drives (9, 10) are arranged in a common bearing frame (14) fastened to the hull (2).

2. Axle module according to Claim 1, **characterized in that** at least some of the bearing seats (20), which are adjacent to the side walls (15, 16) of the hull (2), of the drive shafts (22) of the axle drives (9, 10) are arranged in or on the side walls (15, 16) of the hull (2).

3. Axle module according to Claim 1, **characterized in that** the two axle drives (9, 10) are arranged symmetrically with respect to one another in relation to the bearing frame (14).

4. Axle module according to one of Claims 1 to 3, **characterized in that** cooling bodies (26) for the air-cooling of the axle drives (9, 10) are arranged at least on the outer sides of the side walls (15, 16) of the hull (2).

5. Axle module according to one of Claims 1 to 4, **characterized in that** the two axle drives (9, 10) situated in the drive housing utilize a common oil circuit.

6. Axle module according to one of Claims 1 to 5, **characterized in that**, laterally on the drive housing which contains the two axle drives, there is arranged an open transverse duct (31) in which at least one brake disc of a parking brake (32) is arranged in order to be cooled by the ambient air.

## Revendications

1. Module d'essieu pour un véhicule sur roue pouvant être constitué de plusieurs modules de véhicule, comprenant les caractéristiques suivantes :
a) le module d'essieu (1; 1' ; 1") comprend un bac (2), un train de roulement (5) présentant au moins deux roues de véhicule (3, 4), sur lequel s'appuie le bac (2) du côté du sol, et un entraînement (6) ;
b) à l'intérieur du bac (2) sont disposés au moins deux unités essieu-engrenage (9, 10) pourvues d'arbres d'entraînement et de prise de force, qui relient indépendamment l'une de l'autre chacune un moteur électrique (7, 8) à chaque roue de véhicule (3, 4) du train de roulement (5) située à l'extérieur du bac (2) ;
c) les deux unités essieu-engrenage (9, 10) possèdent un boîtier de transmission commun formé par le bac (2) du module d'essieu (1 ; 1' ; 1") et
d) les paliers extérieurs (23) des arbres de prise de force (24) des unités essieu-engrenage (9, 10) ainsi que les sièges du joint à lèvre radial (25) des arbres de prise de force (24) sont disposés dans ou contre les parois latérales opposées (15, 16) du bac (2), adjacentes aux roues du véhicule (3, 4),
**caractérisé en ce que** le véhicule sur roue est blindé, et **en ce qu'**au moins une partie des sièges de palier (21) des arbres d'engrenage (22) des deux unités essieu-engrenage (9, 10) opposés aux parois latérales (15, 16) du bac (2) est disposée dans un bâti de palier (14) fixé en commun avec le bac (2).

2. Module d'essieu selon la revendication 1, **caractérisé en ce qu'**au moins une partie des sièges de palier (20) des arbres d'engrenage (22) des unités essieu-engrenage (9, 10) adjacents aux parois latérales (15, 16) du bac (2) est disposée dans ou contre les parois latérales (15, 16) du bac (2).

3. Module d'essieu selon la revendication 1, **caractérisé en ce que** les deux unités essieu-engrenage (9, 10) sont disposées de manière symétrique l'une par rapport à l'autre par rapport au bâti de palier (14).

4. Module d'essieu selon l'une quelconque des revendications 1 à 3, **caractérisé en ce qu'**au moins sur les côtés extérieurs des parois latérales (15, 16) du bac (2) sont disposés des corps de refroidissement (26) pour le refroidissement à air des unités essieu-engrenage (9, 10).

5. Module d'essieu selon l'une quelconque des revendications 1 à 4, **caractérisé en ce que** les deux unités essieu-engrenage (9, 10) situées dans le boîtier de transmission utilisent un circuit d'huile commun.

6. Module d'essieu selon l'une quelconque des revendications 1 à 5, **caractérisé en ce qu'**un conduit transversal ouvert (31) est disposé latéralement sur le boîtier de transmission contenant les deux unités essieu-engrenage, dans lequel conduit transversal est disposé au moins un disque de frein d'un frein de stationnement (32) pour le refroidissement par l'air extérieur.
